Europäisches Patentamt

(19) European Patent Office

Office européen des brevets

(11) Numéro de publication: **0 060 814**
**B1**

(12) **FASCICULE DE BREVET EUROPEEN**

(45) Date de publication du fascicule du brevet:
27.08.86

(51) Int. Cl.⁴: **G 01 C 17/04**

(21) Numéro de dépôt: **82810119.6**

(22) Date de dépôt: **16.03.82**

(54) **Dispositif pour indiquer la direction de La Mecque.**

(30) Priorité: 17.03.81 CH 1791/81
23.12.81 CH 8238/81

(43) Date de publication de la demande:
**22.09.82 Bulletin 82/38**

(45) Mention de la délivrance du brevet:
**27.08.86 Bulletin 86/35**

(84) Etats contractants désignés:
**AT BE CH DE FR GB IT LI LU NL SE**

(56) Documents cités:
**EP - A - 0 048 296**
**DE - A - 2 615 614**
**FR - A - 451 843**
**FR - E - 64 028**

(73) Titulaire: **CONSORTIUM FOR WORLD TRADE
ESTABLISHMENT, Austrasse 1, FL-9490 Vaduz (LI)**

(72) Inventeur: **Bernhardt, William H., 6, rue Pédro Meylan,
CH-1208 Genève (CH)**

(74) Mandataire: **Nithardt, Roland, WALTER FR MOSER
PATENT SERVICE SA 76, rue de Lausanne,
CH-1202 Genève (CH)**

ACTORUM AG

## Description

La présente invention concerne un dispositif pour indiquer la direction de la Mecque tel que défini dans le préambule de la revendication 1.

Le brevet FR-A-451 843 décrit un dispositif de ce genre, dans lequel l'élément rotatif portant les références de direction est un cadran en forme de disque pourvu d'une graduation, le long de laquelle peuvent être inscrits des noms de villes ou de pays. Cependant, comme tous les dispositifs connus du même genre, cela ne permet de présenter à l'utilisateur qu'un nombre de villes qui est limité par la faible surface du cadran, particulièrement sur un dispositif de la taille d'une montre-bracelet.

Pour remédier à cet inconvénient, le brevet cité mentionne l'utilisation de tableaux auxiliaires indiquant des nombres représentatifs de la direction de la Mecque à partir d'un grand nombre de villes, ces nombres correspondant à ceux de la graduation du cadran et constituant en fait des azimuts magnétiques. Toutefois, ces tableaux sont encombrants et doivent donc souvent être transportés séparément du dispositif lui-même. En outre, ils impliquent un risque important d'erreurs de lecture, donc d'orientation.

La présente invention se propose de réaliser un dispositif unique qui permet de retrouver facilement la direction de la Mecque à partir des villes les plus importantes à travers le monde.

Selon l'invention, ce but est atteint par l'intermédiaire du dispositif défini dans la revendication 1.

La présente invention et ses principaux avantages seront mieux compris en référence à la description d'exemples de réalisation et du dessin annexé, dans lequel:

La figure 1 représente une vue en coupe d'une forme de réalisation de la boussole, conçue pour s'adapter au dispositif selon l'invention.

la figure 2 représente une vue en coupe d'une forme de réalisation du dispositif selon l'invention, et

la figure 3 représente une vue de dessus du dispositif de la figure 2.

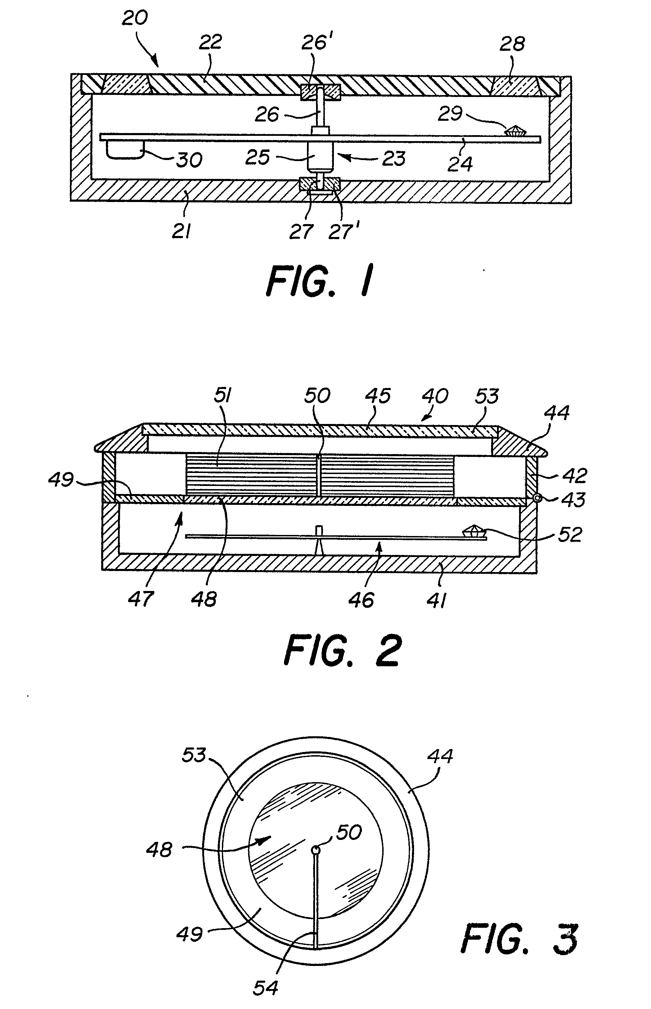

En référence à la figure 1, la boussole 20, destinée à être contenue dans un boîtier (non représentée) d'un dispositif pour indiquer la direction de la Mecque, se compose essentiellement d'une boîte 21 réalisée en matière synthétique ou en un métal non magnétisable, recouverte d'un couvercle 22. Entre le couvercle 22 et le fond de la boîte 21 est fixé le support 23 de l'aiguille aimantée 24. Ce support comporte un corps central 25, par exemple cylindrique, sur lequel est enchâssée l'aiguille 24, et deux goupilles axiales 26 et 27, disposées de part et d'autre du corps central 25, qui pénètrent dans les alésages centraux respectifs de deux paliers 26' et 27' par exemple constitués par des pierres d'horlogerie.

Le couvercle 22 est constitué de préférence par une plaque opaque pourvue d'une fenêtre transparente circulaire 28, localisée au voisinage du bord extérieur du couvercle 22. Cette fenêtre transparente permet de voir l'extrémité indiquant le nord de l'aiguille aimantée 24. La plage centrale circulaire du couvercle 22 sert de support à un disque sur lequel sont imprimés les noms des villes et les repères correspondants.

Pour faciliter le repérage de l'extrémité de l'aiguille aimanté indiquant la direction du nord magnétique, celle-ci est pourvue d'un petit brillant de joaillerie 29, par exemple un diamant, qui est fixé par un moyen mécanique quelconque à la surface supérieure de cette aiguille. Pour contrebalancer le poids de l'élément 29, une masselotte 30 est par exemple fixée à l'autre extrémité de l'aiguille 24.

Bien entendu, ce contrepoids peut être supprimé lorsque la configuration de l'aiguille assure la compensation.

Le brillant de joaillerie peut être une pierre précieuse, une pierre semi-précieuse ou une imitation de pierre précieuse dont le but essentiel est de faciliter le repérage de la position de l'aiguille aimantée.

La figure 2 illustre un dispositif selon la présente invention, pouvant être équipé d'une boussole du type décrit en référence à la fig. 1. Le dispositif de la fig. 2 comporte un boîtier 40 ayant un fond 41, une carrure 42 articulée au moyen d'une charnière 43 au fond 41 et une lunette 44 rotative par rapport à la carrure 42.

A l'intérieur du fond est logée une boussole 46 qui est conçue comme un module indépendant placé dans le boîtier et fixé par collage ou par tout autre moyen approprié au fond de ce boîtier. Elle est recouverte par un verre 47 qui présente, comme le montre plus particulièrement la fig. 3, une zone circulaire 48 opaque et une zone transparente annulaire 49.

Ce verre porte en son centre un téton 50 autour duquel sont superposés un ensemble de disques 51 portant les noms des villes et les références numériques correspondantes. La lunette 44 porte, régulièrement disposées sur sa périphérie, des références numériques identiques à celles correspondant aux noms des villes, par exemple des références allant de 0 à 80. Les disques 51 sont d'une part pincés entre le verre 47 et le verre 45 et retenus par des moyens appropriés par rapport au verre intérieur 47, de telle manière qu'ils ne puissent pas tourner autour du pivot 50.

Comme dans la réalisation illustrée par la fig. 1, l'aiguille aimantée porte à son extrémité un diamant 52 visible au travers de la zone annulaire 49 du verre intérieur 47 et à travers la zone annulaire 53 du verre supérieur 45 périphérique au disque supérieur 51.

La ligne 54 indiquant la direction de la Mecque est peinte ou rapportée sur ou sous le verre 45.

Pour utiliser ce dispositif, on commence par mettre en place le disque 51 qui correspond à la ville dans laquelle on se trouve. On repère la référence de cette ville et on tourne la lunette 44 rotative jusqu'à ce que le repère de la ville inscrit sur la lunette coïncide avec le diamant 52, c'est-à-dire l'extrémité de l'aiguille aimantée de la boussole. La direction de la Mecque est indiquée par la ligne 54.

Par rapport à l'art antérieur, le dispositif selon l'invention présente des avantages remarquables. Grâce à la série de disques interchangeables qu'il renferme, il permet à l'utilisateur de s'orienter avec la précision maximale assurée par la boussole à partir d'un grand nombre de villes réparties sur tout le globe. Par exemple, un dispositif comportant huit disques peut comporter la mention de plusieurs centaines de villes. Les villes d'une région donnée peuvent être groupées sur un même disque. En outre, comme l'utilisateur a sous ses yeux toutes les données pendant qu'il s'oriente, le risque d'erreur est réduit. Enfin, la détection visuelle de l'aiguille de la boussole est sensiblement améliorée.

**Revendications**

1. Dispositif pour indiquer la direction de la Mecque, comportant:
– une boussole (20, 46) comprenant une boîte (21) et une aiguille aimantée (24) montée rotativement dans cette boîte,
– un élément de cadran (44) monté en face de la boussole d'une manière rotative par rapport à l'axe de rotation de l'aiguille aimantée, ledit élément étant muni, d'une part, de références de direction réparties sur sa périphérie, dont chacune représente une ville d'une région prédéterminée du monde, et, d'autre part, d'un repère (54) prévu pour indiquer la direction de la Mecque,
les positions angulaires relatives des références de direction et du repère étant telles que le repère montre effectivement la direction suivant laquelle apparaît la Mecque dans une des villes associées avec les références, si la position angulaire relative de l'élément de cadran par rapport à la direction du nord indiquée par l'aiguille aimantée dans cette ville est modifiée de façon à faire coïncider la référence associée à cette ville avec la direction du nord,
dispositif étant caractérisé en ce que:
– la boussole (20, 46) constitue un module étanche logé dans le fond (41) d'un boîtier (40),
– l'élément de cadran est constitué par une lunette transparente (44) montée rotativement à sa périphérie sur le bord supérieur d'une section de paroi latérale (42) dudit boîtier, l'ensemble consistant en ladite section et la lunette étant articulée sur la partie périphérique du fond (41),
– une pluralité de disques (51), empilés les uns sur les autres et portant chacun des noms de villes d'une région prédéterminée du monde ainsi que des références de direction associées à ces villes et identiques aux références indiquées sur l'élément de cadran, est disposée dans le boîtier, entre la boussole et la lunette, lesdits disques étant amovibles et interchangeables et leurs dimensions étant telles qu'une extrémité de l'aiguille aimantée reste visible à travers la lunette.

2. Dispositif selon la revendication 1, caractérisé en ce que lesdites références sont chiffrées.

3. Dispositif selon la revendication 1, caractérisé en ce que la boîte de la boussole (20, 46) contient un liquide coloré, et en ce que la partie de l'aiguille de la boussole indiquant le nord a une couleur qui contraste avec le liquide coloré contenu dans la boîte de la boussole.

4. Dispositif selon la revendication 1, caractérisé en ce que l'extrémité de l'aiguille aimantée de la boussole est équipée d'un élément (29, 52) qui améliore la détection visuelle de sa position, et en ce que la partie opposée de l'aiguille est invisible.

5. Dispositif selon la revendication 4, caractérisé en ce que l'élément (29, 52) fixé à l'extrémité de l'aiguille aimantée est constitué par un brillant utilisé en joaillerie.

6. Dispositif selon la revendication 4, caractérisé en ce que l'élément (29, 52) équipant l'extrémité de l'aiguille aimantée est une pierre précieuse.

**Claims**

1. Device to indicate the direction of the Mecca, comprising:
– a compass (20, 46) having a housing (21) and a magnetic needle (24) rotatively mounted inside of said housing,
– a dial element (44) mounted opposite to said compass, and rotative with respect to the axes of the magnetic needle, said element being provided with guide marks distributed along its circumference, each of these guide marks corresponding to a town of a predetermined region of the world, and with a direction mark (54) for indicating the direction of the Mecca,
the relative angular positions of the guide marks and of the direction mark being such that said direction mark indicates substantially the direction in which is located the Mecca from one of the towns corresponding to said guide marks, if the relative angular position of the dial element with respect to the direction of the north indicated by the magnetic needle in said town is modified in order to bring into coïncidence the guide mark of said town with the direction of the north,
said device being characterized in that:
– the compass (20, 46) is a tight unit located in the bottom (41) of the housing (40),
– the dial element is a transparent bezel (44) rotatively mounted on the upper edge of a part of the lateral wall (42) of said housing, said bezel being articulated on the peripheral part of said bottom (41),
– a plurality of piled up discs (51), each of them being provided with names of towns of a predetermined region of the world and with the guide marks associated with said towns and identical to the guide marks marked on the dial element, said plurality of discs being located inside of said housing, between said compass and said bezel, said discs being renovable and interchangeable and their dimensions being such that a free end of said magnetic needle remains visible through that bezel.

2. Device according to claim 1, characterized in that the said guide marks are cipher codes.

3. Device according to claim 1, characterized in that said housing of said compass (20, 46) contains a coloured fluid, and in that the part of the needle of the compass indicating the north has a colour which contrasts with the coloured fluid contained in said compass housing.

4. Device according to claim 1, characterized in that the free end of the magnetic needle is provided with an element (29, 52) which improves the visual detection of its position, and in that the opposed part of said needle is unvisible.

5. Device according to claim 4, characterized in that said element (29, 52) which is mounted at the free end of the magnetic needle si a brilliant used in jewellery.

6. Device according to claim 1, characterized in that said element (29, 52) which is mounted at the free end of the magnetic needle is a precious stone.

## Patentansprüche

1. Mekkarichtungsanzeigevorrichtung bestehend aus:
– einem Kompass (20, 46), der ein Gehäuse (21) und eine magnetische Nadel (24) aufweist, die drehbar in diesem Gehäuse montiert ist,
– einem Zifferblatteil (44), das gegenüber dem Kompass drehbar im Verhältnis zu der Drehachse der magnetischen Nadel angebracht ist, wobei dieses Teil einerseits Markierungen aufweist, die über seinen äusseren Umkreis verteilt sind, wobei jede einer Stadt einer bestimmten Region der Welt entspricht, und andererseits eine Richtungsanzeige (54), die zum Anzeigen der Richtung von Mekka vorgesehen ist,
wobei die Winkelpositionen der Markierungen im Verhältnis zu der Richtungsanzeige derart sind, dass diese Richtungsanzeige tatsächlich in einer der Städte, die einer Markierung entspricht, die Richtung anzeigt, in der Mekka liegt, wenn die Winkelposition des Zifferblatteils im Verhältnis zu der durch die magnetische Nadel angezeigte Nordrichtung in dieser Stadt so verändert wird, dass die mit der Stadt verbundene Markierung mit der Nordrichtung zusammenfällt,

wobei diese Vorrichtung dadurch gekennzeichnet ist, dass
– der Kompass (20, 46) eine wasserdichte Einheit bildet, die im Boden (41) eines Gehäuses eingesetzt ist,
– das Zifferblatteil einen durchsichtigen Glasreif (44) aufweist, der drehbar am Umfang des oberen Randes eines Teils der Seitenwand des Gehäuses angebracht ist, wobei das Ganze bestehend aus dem besagten Teil und dem Glasreif an das den Umfang bildende Teil des Bodens (41) angelenkt ist,
– eine Mehrzahl von einer auf die andere gestapelten Scheiben (51), wovon jede die Namen von Städten einer bestimmten Region der Welt trägt, sowie die mit diesen Städten verbundenen Markierungen, die mit den auf dem Zifferblatteil angegebenen Markierungen identisch sind, in dem Gehäuse zwischen dem Kompass und dem Glasreif angeordnet ist, wobei die besagten Scheiben abnehmbar und austauschbar sind und ihre Ausmasse so bemessen sind, dass das Ende der magnetischen Nadel durch den Glasreif sichtbar bleibt.

2. Vorrichtung nach Anspruch 1, dadurch gekennzeichnet, dass die besagten Markierungen Zahlen sind.

3. Vorrichtung nach Anspruch 1, dadurch gekennzeichnet, dass das Gehäuse des Kompasses (20, 46) eine gefärbte Flüssigkeit enthält, und dass der Teil der Kompassnadel, der den Norden anzeigt, eine Farbe hat, die mit der in dem Gehäuse des Kompasses enthaltenen Flüssigkeit kontrastiert.

4. Vorrichtung nach Anspruch 1, dadurch gekennzeichnet, dass das Ende der magnetischen Nadel mit einem Element (29, 52) ausgerüstet ist, dass die Sichtbarkeit seiner Position verbessert, und dass der entgegengesetzte Teil der Nadel unsichtbar ist.

5. Vorrichtung nach Anspruch 4, dadurch gekennzeichnet, dass das am Ende der magnetischen Nadel befestigte Element (29, 52) aus einem in der Juwelierindustrie verwendeten Brillanten besteht.

6. Vorrichtung nach Anspruch 4, dadurch gekennzeichnet, dass das Element (29, 52) am Ende der magnetischen Nadel ein Edelstein ist.

FIG. 1

FIG. 2

FIG. 3